# EUROPÄISCHE PATENTSCHRIFT

(11) **EP 3 014 969 B1**
(45) Veröffentlichungstag und Bekanntmachung des Hinweises auf die Patenterteilung: **14.03.2018**
(21) Anmeldenummer: 15401102.7
(22) Anmeldetag: 15.10.2015
(51) Int. Cl.: A01C 21/00, A01B 79/00, A01C 17/00

(54) **VERFAHREN ZUR STEUERUNG EINER LANDWIRTSCHAFTLICHEN VERTEILMASCHINE AUF EINER LANDWIRTSCHAFTLICHEN FLÄCHE**
METHOD FOR CONTROLLING AN AGRICULTURAL DISTRIBUTION MACHINE ON AN AGRICULTURAL AREA
PROCÉDÉ DE COMMANDE D'UN ÉPANDEUR AGRICOLE SUR UNE SURFACE AGRICOLE

(30) Priorität: 27.10.2014 DE 102014115551
(43) Veröffentlichungstag der Anmeldung: 04.05.2016
(73) Patentinhaber: Amazonen-Werke H. Dreyer GmbH & Co. KG, 49205 Hasbergen (DE)
(72) Erfinder: Kühn, Christoph, 49080 Osnabrück (DE); Bardroff, Alexander, 26127 Oldenburg (DE); Konermann, Thomas, 49479 Ibbenbüren (DE)

(56) Entgegenhaltungen:
- EP-A1- 2 944 175
- DE-A1- 19 504 703
- DE-A1- 19 835 487
- DE-A1-102005 008 105
- US-B1- 6 216 614
- "Amazone ZA-M ZA-M Profis", , August 2014 (2014-08), Seiten 1-36, XP055256481, Gefunden im Internet: URL:http://info.amazone.de/DisplayInfo.asp x?id=32386 [gefunden am 2016-03-08]

## Beschreibung

Die Erfindung betrifft ein Verfahren zur Steuerung einer landwirtschaftlichen Verteilmaschine auf einer landwirtschaftlichen Fläche gemäß dem Oberbegriff des unabhängigen Patentanspruchs.
Eine derartige Verteilmaschine kann beispielsweise als Schleuderstreuer zur Ausbringung von landwirtschaftlichem Düngemittel ausgebildet sein. Diese besitzen vorzugsweise zwei mit Wurfschaufeln bestückte Schleuderscheiben, welche mit dem auszubringenden Düngemittel mittels geeigneter Zuführvorrichtungen beschickt werden. Es kann sich aber auch beispielsweise um eine Feldspritze oder eine Sämaschine handeln.
Bei der Verteilung von Dünge- oder Spritzmittel auf landwirtschaftlichen Flächen ist zur Vermeidung von Umweltbelastungen Sorge zu tragen, dass entsprechend gesetzlicher Vorgaben betreffende Mittel nicht auf angrenzende Flächen gelangen. So kann beispielsweise vorgeschrieben sein, dass gewässernahe Randbereiche von der Verteilung ausgenommen sein müssen, um das Einschwämmen des Mittels in das Gewässer auszuschließen.
Dies wird gewöhnlich sichergestellt, indem in der Nähe von Feldgrenzen die Arbeitsbreite und/oder Wurfweite der Düngerpartikel reduziert wird, beispielsweise mittels Reduktion der Schleuderscheibendrehzahl, Modifikation der Wurfschaufeln, dem Abschalten einer der Schleuderscheiben oder dem Einsatz einer speziellen Rand-/Grenzstreueinrichtung.
Die Vorkehrungen, welche hierbei getroffen werden, unterscheiden sich, je nachdem welcher Art die angrenzende Fläche ist. So sind beispielsweise in der Nähe von Gewässern strengere Auflagen einzuhalten als bei angrenzenden landwirtschaftlichen Flächen.
Um in diesen Bereichen Fehl- und Überdüngung zu vermeiden und zudem eine Arbeitserleichterung für den Landwirt zu ermöglichen, ist die Anwendung einer elektronischen Steuerung der Arbeitsbreite wünschenswert.

Eine Vorrichtung zur Durchführung einer solchen Steuerung ist beispielsweise bekannt durch die Offenlegungsschrift DE 42 23 585 A1. Diese Veröffentlichung beschreibt eine Maschine zur Verteilung von landwirtschaftlichem Gut, wie beispielsweise Düngemittel. Die Maschine verfügt über einen Positionsgeber zur Bestimmung des aktuellen Ortes derselben und einen Speicher zur Hinterlegung von Kartenmaterial oder Konturdaten einer landwirtschaftlichen Fläche. Es wird vorgeschlagen, dass die Steuerung der Dosierorgane und/oder der Arbeitsbreite entsprechend der Feldrandkontur durchführbar ist. Außerdem ist vorgesehen, dass die Dosierorgane entsprechend der Feldrandkontur automatisch eingestellt werden.

Die DE 10 2005 008 105 A1 sowie die Werbeschrift "Amazone ZA-M ZA-M Profis", August 2014 (2014-08), beschreiben allgemein eine Regelung zur Vermeidung der Verteilung von Düngemitteln auf angrenzende Flächen unter Verwendung von Kartendaten und einem Positionserfassungssystem, welche auch vorausschauend durchgeführt werden kann.

Für eine effektive Vermeidung oder Reduzierung von Umweltbelastungen ist es jedoch erforderlich bereits in einiger Entfernung von der Feldgrenze die Behandlung mit Dünge- bzw. Spritzmitteln einzuschränken und anzupassen. So ist es nach geltender Düngeverordnung beispielsweise untersagt, in einer Entfernung von weniger als 3 m zu einem Gewässer Düngemittel auszubringen bzw. in einer Entfernung von weniger als 1 m, falls eine Grenzstreueinrichtung vorhanden ist. Es ist daher nicht ausreichend lediglich die Feldgrenze selbst als Randkontur des zu bearbeitenden Bereiches anzusehen.
Aufgabe der vorliegenden Erfindung ist es daher, eine automatische Behandlung einer landwirtschaftlichen Fläche durchzuführen, wobei insbesondere in grenznahen Bereichen, also solchen, bei denen sich die Grenze der landwirtschaftlichen Fläche ungefähr die Hälfte einer Arbeitsbreite der Verteilmaschine von der Verteilmaschine entfernt befindet, die Verteilung des Guts an die nahe Feldgrenze angepasst wird.
Gemäß einem Verfahren zur Steuerung einer Maschine zur Verteilung von landwirtschaftlichem Gut wird ein Signal durch das auf dem Jobrechner und/oder dem Terminal gespeicherte Programm generiert, falls sich in einer Entfernung, welche gleich oder kleiner als ein zuvor festgelegter Wert ist, von der momentan durch die Feldspritze unmittelbar besprühten oder mittels des Düngerstreuers mit Streugut beworfenen landwirtschaftlichen Fläche in Fahrtrichtung rechts und/oder links zumindest eine zweite Fläche befindet, welche außerhalb der Grenzen der zu bearbeitenden landwirtschaftlichen Fläche ist, und dass dieses Signal verwendet wird, um die Bearbeitung des Randbereiches der zu bearbeitenden landwirtschaftlichen Fläche entsprechend der hinterlegten Vorschrift zu steuern. Mittels dieses Verfahrens kann in vorteilhafter Weise sichergestellt werden, dass Feldgrenzen, welche sich in einem Abstand von der Arbeitsmaschine befinden, der kleiner oder gleich einem zuvor festgelegten Wert ist, bei der Verteilung des landwirtschaftlichen Guts berücksichtigt werden.

In einer Ausgestaltung kann vorgesehen sein, dass der Abstand zwischen der Maschine und der Feldgrenze ermittelt wird, um in vorteilhafter Weise die Entfernung zu der angrenzenden Fläche festzustellen und die Dosierelemente entsprechend einzustellen.

In einer Ausgestaltung dient besagte Vorschrift zur Steuerung einer Randstreueinrichtung eines Düngerstreuers und/oder der Steuerung der Drehzahl der Streuteller und/oder der Steuerung einer Schaltvorrichtung der Wurfschaufeln und/oder der Steuerung des Dosierschiebers eines Düngerstreuers und/oder der Steuerung der Spritzdüsen und/oder der Randdüsen einer Feldspritze und/oder einer Dosiereinrichtung einer Sämaschine und/oder dem Anheben oder Absenken eines Spuranreißers einer Sämaschine.

In einer vorteilhaften Weiterbildung sind neben der Feldgrenze weitere Positionsdaten innerhalb der Feldgrenze in dem Speicher des Jobrechners und/oder des Terminals hinterlegt, welche von einer Bearbeitung ausgenommen sein sollen, wie vorzugsweise die Position oder Bereiche von Gewässern, Bäumen und/oder Baumgruppen oder sonstigen nicht zu bearbeitenden Flächen, so dass nicht nur außen an die Feldgrenze anschließende Flächen bei der Bearbeitung berücksichtigt werden, sondern auch Objekte, welche sich innerhalb der landwirtschaftlichen Fläche befinden.

In einer Ausgestaltungentspricht die größte durch eine geschlossene Linie umschlossene Fläche der zu bearbeitenden Fläche, während alle kleineren von Linien umschlossenen Flächen von der Bearbeitung ausgenommen sind, so dass in vorteilhafter Weise die Unterscheidung zwischen zu bearbeitender und von der Bearbeitung auszusparender Fläche automatisiert wird.

In einer anderen Ausgestaltung ist zu jeder zusammenhängenden Fläche und/oder jeder Koordinateninformation zusätzlich gespeichert, ob die betreffende Fläche/die betreffende Koordinate bearbeitet werden soll oder nicht. Somit wird abweichend von der zuvor beschriebenen Ausgestaltung manuell festgelegt, welche Flächen zu bearbeiten sind und welche von der Bearbeitung auszusparen sind.

In einer vorteilhaften Ausgestaltung wird für jede nicht zu bearbeitende Fläche und/oder Koordinate gespeichert, dass diese nicht zu bearbeiten ist und/oder welcher Flächentyp dieser Fläche und/oder dieser Koordinate zugeordnet ist, vorzugsweise Wasserfläche und/oder Grünfläche und/oder Waldfläche und/oder angrenzende landwirtschaftliche Fläche und/oder Wohnfläche und/oder Verkehrsfläche, und dass entsprechend dieses Flächentyps die Bearbeitung des Randbereichs der landwirtschaftlichen Fläche gesteuert wird. Auf diese Weise kann nicht nur die Bearbeitung entsprechend der Unterscheidung zwischen zu bearbeitender und auszusparende Fläche erfolgen, vielmehr kann zusätzlich, beispielsweise entsprechend gesetzlicher Bestimmungen, die Bearbeitung an Hand der Art der benachbarten Fläche gesteuert werden.

In einer weiteren vorteilhaften Ausgestaltung wird die Vorschrift zur Bearbeitung des Randbereichs der landwirtschaftlichen Fläche auf Basis der Information einer zweiten Fläche angewendet, welche sich in einem festgelegten Abstand rechts und/oder links neben und außerdem in Fahrtrichtung vor der momentan bearbeiteten, also durch die Feldspritze unmittelbar besprühten oder mittels des Düngerstreuers mit Streugut beworfenen, landwirtschaftlichen Fläche in Fahrtrichtung befindet und der Abstand in Fahrtrichtung zwischen der zweiten Fläche und der momentan bearbeiteten landwirtschaftlichen Fläche derart gewählt, dass der Zeitraum bis sich diese zweite Fläche rechts oder links neben der bearbeiteten Fläche befindet ausreichend ist, um die entsprechende Anpassung der Feldspritze und/oder des Düngerstreuers basierend auf der Vorschrift der Bearbeitung der Randflächen vorzunehmen. Somit kann in vorteilhafter Weise beispielsweise eine herannahende angrenzende landwirtschaftliche Fläche oder Wasserfläche berücksichtigt werden, indem die Einstellung der Maschine entsprechend des hierfür benötigten Zeitraumes rechtzeitig durchgeführt wird.

In einer vorteilhaften Erweiterung sind zumindest zwei verschiedenen Flächentypen jeweils zumindest eine Entfernung und jeweils zumindest eine Vorschrift zur Bearbeitung zugeordnet, so dass für verschiedene Flächentypen jeweils in Abhängigkeit von der Entfernung der Maschine zur Grenze der landwirtschaftlichen Fläche verschiedene Vorschriften zur Bearbeitung angewendet werden, wobei die hinterlegten Entfernungen und/oder die hinterlegten Vorschriften zur Bearbeitung auch für zwei oder mehr verschiedene Flächentypen gleich sein können. Somit können in vorteilhafter Weise unterschiedliche Typen von Flächen in unterschiedlichen Abständen bei der Bearbeitung der Randbereiche berücksichtigt werden, da beispielsweise in der Nähe von Gewässern ein größerer Abstand beim Düngen zur Feldgrenze eingehalten werden muss, als bei benachbarten landwirtschaftlichen Flächen.

Ein weiteres Verfahren zur Steuerung einer Maschine zur Verteilung von landwirtschaftlichem Gut gemäß dem Oberbegriff des unabhängigen Anspruchs ermöglicht die Bearbeitung von Feldgrenzbereichen und außerdem die Ausübung von Prozessen zur Vorbereitung der Ausbringung von landwirtschaftlichem Gut, wobei ein Signal durch das auf dem Jobrechner und/oder dem Terminal gespeicherte Programm generiert wird, falls sich in einer Entfernung, welche gleich oder kleiner als ein zuvor festgelegter Wert ist, von der Verteilmaschine in beliebiger Richtung eine zweite Fläche befindet, welche sich vorzugsweise außerhalb der Grenzen der zu bearbeitenden landwirtschaftlichen Fläche befindet und/oder eine bereits bearbeitete oder noch unbearbeitete Fläche markiert, und dass dieses Signal verwendet wird um die Einstellung von Einstellparametern der landwirtschaftlichen Maschine, vorzugsweise Grenzstreueinrichtung eines Düngerstreuers und/oder Düsen einer Feldspritze vorzugsweise zur Bearbeitung von Randbereichen einer landwirtschaftlichen Fläche und/oder Dosierelementen einer Sämaschine, entsprechend der hinterlegten Vorschrift durchzuführen. Es wird die Vorschrift zur Einstellung von Einstellparametern derart ausgestaltet, dass eine Sperrzone definiert wird, welche an zumindest einer Maschinenseite der landwirtschaftlichen Maschine angeordnet ist, so dass bei Vorliegen eines Signals, welches vorzugsweise eine Feldgrenze und/oder angrenzende Fläche und/oder bearbeitete und/oder unbearbeitete Fläche signalisiert, die Sperrzone von zu verteilendem Gut, vorzugsweise Pflanzenschutzmittel und/oder Düngemittel und/oder Saatgut, frei bleibt. Auf diese Weise kann vorteilhaft ein Bereich definiert werden, welcher von zu verteilendem Gut freigehalten wird. Beispielsweise kann analog zu den in der Düngeverordnung festgelegten Mindestabständen eine Sperrzone der Verteilung am Rand der zu bearbeitenden Fläche so auf einfache Weise manuell definiert werden.

Zudem wird erfindungsgemäß die Sperrzone in Fahrtrichtung vor den Verteilorganen der landwirtschaftlichen Maschine platziert, so dass vor Erreichen der Feldgrenze einer landwirtschaftlichen Fläche ein Bereich am Rand der landwirtschaftlichen Fläche in Fahrtrichtung, ein sogenanntes Vorgewende, von der Verteilung des landwirtschaftlichen Gutes ausgenommen ist. Auf diese Weise wird vorteilhaft das Anlegen eines Vorgewendebereiches positionsgesteuert automatisiert durchgeführt.
Auch kann auf diese Weise eine gewollte Überlappung oder Unterlappung, also Fehlbereiche der Verteilung, bei der Bearbeitung von Vorgewendebereich und Rest der landwirtschaftlichen Fläche erreicht werden, so dass also entweder ein schmaler Streifen im Übergang von dem größeren regulär bearbeiteten Teil der landwirtschaftlichen Fläche zu dem Vorgewendeteil doppelt oder gar nicht bearbeitet wird. Dies kann beispielsweise realisiert werden, indem die Sicherheitszone zum Anlegen des Vorgewendes absichtlich größer oder kleiner gewählt wird, als es die Breite des tatsächlichen Vorgewendes erfordert. Dies kann beispielsweise gewünscht werden, um im Übergangsbereich von Vorgewende und restlicher Fläche Fehlstellen der Bearbeitung, welche zum Beispiel durch geringe Ungenauigkeit bei der Positionsbestimmung mittels GPS hervorgerufen werden können, absolut auszuschließen. Letzteres kann alternativ jedoch auch realisiert werden, indem der GPS-gesteuerten Teilbreitenschaltung, also der automatischen Aktivierung bzw. Deaktivierung der Verteilung in einzelnen Segmenten der Arbeitsbreite, manuell ein Über- oder Unterlappungsbereich im Rahmen einer speziell hierfür vorgesehenen Funktion definiert und übergeben wird. Hierdurch würden nicht ausschließlich bei Vorgewendesituationen, sondern an beliebigen Positionen der landwirtschaftlichen Fläche Überlappungen oder Unterlappungen bei der Verteilung in der Nähe bereits bearbeiteter Teilflächen, beispielsweise auch Keilflächen, generiert.

Für das Anlegen einer solchen Sperrzone oder auch für die reguläre positionsgesteuerte Teilbreitenschaltung wäre es zudem hilfreich, wenn manuell deaktivierte Teilbreiten auf einer Anzeigevorrichtung dem Fahrer der landwirtschaftlichen Maschine/ Zugmaschine deutlich sichtbar angezeigt werden. Auf diese Weise kann durch Aufmerksam machen des Fahrers vermieden werden, dass Teilbreiten, die zuvor manuell deaktiviert wurden, beispielsweise beim Verlassen des Vorgewendebereiches, wenn die automatische Teilbreitenschaltung die Verteilung aktiviert, versehentlich ausgeschaltet bleiben, weil der Fahrer vergessen hat, diese Teilbreiten wieder manuell zu aktivieren.

Die Realisierung solcher Verfahren kann in vorteilhafter Weise mit Hilfe von virtuellen Teilbreiten, vorzugsweise mit Hilfe sogenannter Data Dictionary Identifier im Rahmen der Isobusnorm ISO 11783, erreicht werden. Derartige Teilbreiten werden bei einer Feldspritze oder einer Sämaschine vorzugsweise den jeweiligen Ausbringaggregaten, wie beispielsweise Spritzdüsen oder Säscharen, zugeordnet, wobei auch immer mehrere dieser Aggregate zu einer Teilbreite zusammengefasst werden können. Beim Düngerstreuer wird vorzugsweise die Arbeitsbreite in eine festgelegte Anzahl von Teilbreiten eingeteilt, welche dann, wie bei Feldspritze und Sämaschine, durch Änderung der Verteilcharakteristik an-oder abgeschaltet werden können. Diese Teilbreiten bewegen sich gemäß der geometrischen Abmessungen und der Verteilcharakteristik der landwirtschaftlichen Maschine und des empfangenen positionsbestimmenden Signals über die landwirtschaftliche Fläche, so dass die bearbeitete Fläche erfasst werden kann. Zusätzlich wird die aktuelle Position der Teilbreiten und auch die bearbeitete Fläche typischerweise auf einer Anzeigevorrichtung dem Bedienpersonal der landwirtschaftlichen Verteilmaschine angezeigt. Für den vorliegenden Offenbarungsgegenstand können derartige virtuelle Teilbreiten verwendet werden, um eine in einem festgelegten Abstand zur landwirtschaftlichen Maschine sich befindliche Grenze der landwirtschaftlichen Fläche oder angrenzende Fläche zu lokalisieren. Hierfür müsste der betreffenden Teilbreite ein Attribut zugewiesen werden, welche sie als innerhalb oder außerhalb der landwirtschaftlichen Fläche identifizieren würde. Weiterhin ist denkbar auf diese Weise einen Überlappungsrespektive Unterlappungsbereich zu definieren oder den jeweiligen Teilbreiten ein Attribut zuzuordnen, welches Auskunft gibt, ob eine Teilbreite durch den Fahrer der Maschine manuell deaktiviert wurde oder nicht.
Zusätzlich könnte ein weiteres Attribut den Flächentyp, beispielsweise landwirtschaftliche Fläche, Wasserfläche, Baumgruppe, Straße oder ähnliches, ausweisen, so dass auf diese Weise eine Bearbeitung des Randbereichs in Abhängigkeit des Typs der angrenzenden Fläche, vorzugsweise auf der Basis gesetzlicher Vorgaben durchgeführt werden könnte. Ein zusätzliches Attribut könnte dazu dienen festzulegen, ob die Teilbreite auf einer Anzeigeeinreichtung dem Bedienpersonal der landwirtschaftlichen Maschine angezeigt wird.
Auch kann eine Anwendung von virtuellen Teilbreiten in einem geschwindigkeitsabhängigen Zeitabstand vor den die Arbeitsbreite abdeckenden Teilbreiten zu einer Detektion von bearbeiteten und unbearbeiteten Flächen und damit einer vorausschauenden Steuerung von prozessvorbereitenden Vorgängen, wie beispielsweise dem Absenken oder Anheben eines Spritzgestänges, genutzt werden.
Weitere Einzelheiten der Erfindung sind der Beispielsbeschreibung und den Zeichnungen zu entnehmen. Hierbei zeigen
- Fig. 1: eine landwirtschaftliche Verteilmaschine, welche eine reduzierte Arbeitsbreite zur Verteilung von landwirtschaftlichem Gut in der Nähe einer Feldgrenze nutzt,
- Fig. 2: eine landwirtschaftliche Verteilmaschine in der Nähe einer Feldgrenze, welche an zwei Flächen unterschiedlichen Typs angrenzt,
- Fig. 3: eine landwirtschaftliche Verteilmaschine bei der um den Arbeitsbereich eine Sperrzone definiert ist und
- Fig. 4: eine landwirtschaftliche Verteilmaschine bei der um den Arbeitsbereich eine Sperrzone definiert ist und mit deren Hilfe ein Vorgewende von der Bearbeitung ausgespart wird.

Das erfindungsgemäße Verfahren wird hier beispielhaft für die Verwendung bei einem Düngerstreuer erläutert. In gleichem Maße ist die Erfindung auch auf andere landwirtschaftliche Verteilmaschinen, wie beispielsweise Feldspritzen oder Sämaschinen anwendbar.

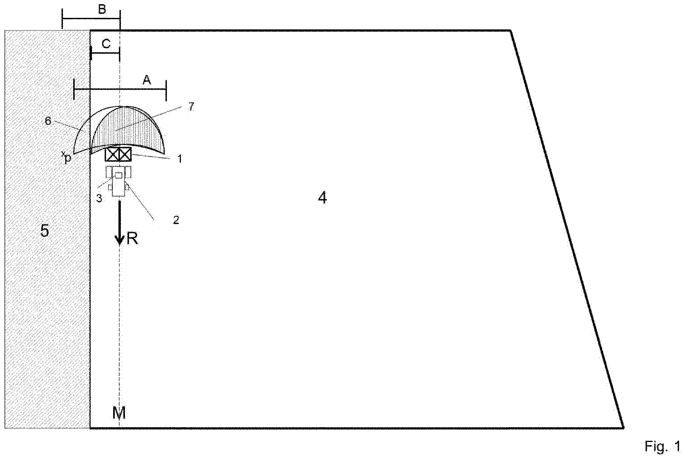

Fig. 1 zeigt in schematischer Darstellung eine landwirtschaftliche Verteilmaschine/Düngerstreuer 1, welche an eine landwirtschaftliche Zugmaschine 2 mit Fahrtrichtung R angekoppelt ist. Letztere verfügt zudem über ein Positionsbestimmungsmodul 3, beispielsweise eine GPS-Antenne, welche aber ebenso der Verteilmaschine zugeordnet sein kann. Mittels der Verteilmaschine wird landwirtschaftliches Gut auf einer landwirtschaftlichen Fläche 4 ausgebracht, wobei sich die Verteilmaschine 1 in der Nähe einer zweiten landwirtschaftlichen Fläche 5 befindet. Die Arbeitsbreite A des Düngerstreuers 1 bezeichnet die Maximalbreite des Streufächers 6, was bei der derzeitigen Position der Verteilmaschine dazu führte, dass Streugut auf die benachbarte Fläche 5 ausgebracht würde.
Statt dessen wird mittels des erfindungsgemäßen Verfahrens permanent oder in festgelegten zeitlichen Abständen überprüft, ob sich links oder rechts bis zu einer Entfernung B von der Mitte der Verteilmaschine 1 auf der Höhe des vorderen Endes des Streufächers in einem Bereich bis zum Ort P eine angrenzende Fläche befindet und wenn dem so ist, wie groß der Abstand C zwischen der in Fahrtrichtung verlaufenden Mittelachse M der Verteilmaschine und der Feldgrenze ist. Entsprechend dieses Wertes wird sodann die Verteilcharakteristik der Verteilmaschine angepasst, beispielsweise mittels Nutzung einer Grenz-/Randstreuvorrichtung und/oder Anpassung der Schleuderscheibendrehzahl und/oder Modifikation der Schleuderschaufeln und/oder Abschaltung einer Schleuderscheibe, so dass ein modifizierter Streufächer 7 gebildet wird, welcher dazu führt, dass kein Streugut auf das benachbarte Feld gebracht wird. Der maßgebliche Ort P, an dem überprüft wird, ob eine Verteilung in unmittelbarer Nähe zu einer angrenzenden Fläche durchgeführt wird, kann direkt seitlich an den maximalen Verteilbereich angrenzen oder sich in einiger Entfernung befinden. Bei einem Standardfahrgassensystem, welches im Unterschied zu Fig. 1 so angelegt ist, dass die neben der Feldgrenze sich befindliche Fahrgasse in einem Abstand von der Feldgrenze angelegt ist, welcher der halben Arbeitsbreite entspricht, wird der Punkt P vorteilhaft so platziert, dass er seitlich im Abstand B von der Mittelachse M positioniert ist. Bei Vorliegen einer solchen Fahrgassenposition und unter Außerachtlassung des Typs der angrenzenden Fläche würde allein die Information ob sich der Punkt P innerhalb der Fläche 4 oder 5 befindet ausreichen, um eine Steuerung der Grenzstreuprozesse durchzuführen.

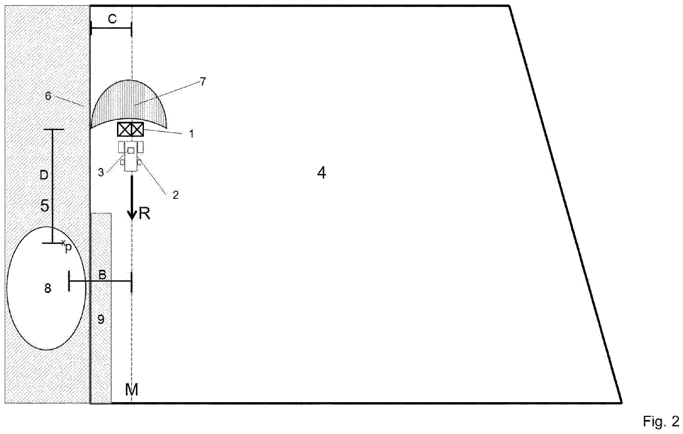

In Fig. 2 ist wiederum schematisch dargestellt die Verteilmaschine 1, gezogen von einer landwirtschaftlichen Zugmaschine 2, welche über ein Positionsbestimmungssystem 3 verfügt und landwirtschaftliches Gut auf eine landwirtschaftliche Fläche 4 ausbringt. Der Streufächer 7 ist wie in Fig. 1 entsprechend des Abstandes C zwischen der Mittelachse M und dem Rand der landwirtschaftlichen Fläche angepasst, um kein Streugut auf die benachbarte landwirtschaftliche Fläche zu bringen. Zusätzlich ist in Fahrtrichtung vor der Verteilmaschine in diesem Beispiel eine an die landwirtschaftliche Fläche unmittelbar angrenzende Wasserfläche 8 dargestellt. Diese erfordert unter Umständen, beispielsweise auf Grund von gesetzlichen Bestimmungen, eine Sicherheitszone 9 am Feldrand zu beachten, auf die kein landwirtschaftliches Gut aufgebracht werden darf, so dass der Streufächer entsprechend der hinterlegten Vorgaben angepasst werden muss. Erfindungsgemäß kann dies mittels zweier oder mehrerer hinterlegter Vorschriften zur Einstellung von Einstellparametern der landwirtschaftlichen Maschine erreicht werden, indem in Abhängigkeit des jeweiligen Flächentyps, welcher sich derzeit bis zu einem Abstand B von der Mittelachse der Verteilmaschine befindet, die Verteilcharakteristik der Verteilmaschine eingestellt wird.

Zusätzlich kann dies mit einem wählbaren zeitlichen Puffer geschehen, um die zur Einstellung der Maschine notwendige Zeit zu berücksichtigen, was in dem vorliegenden Beispiels mittels des Abstandes D zwischen dem in Fahrtrichtung R vorderen Ende des Streufächers 7 und dem Messpunkt P, welcher der für die Einstellung des Streufächers maßgebliche Ort ist, bewerkstelligt wird. Dieser Abstand kann zudem geschwindigkeitsabhängig variabel sein, um einen konstanten Zeitabstand zwischen dem jeweiligen Ort des Streufächers und seinem Passieren des derzeitigen Ortes von P zu gewährleisten. Auch können in vorteilhafter Weise verschiedene Abstände definiert werden, in denen von der Mittelachse aus der Flächentyp bestimmt wird und diesen verschiedenen Abständen jeweils unterschiedliche Vorschriften zur Einstellung der Einstellparameter zugewiesen werden. Dies kann einerseits genutzt werden, um das Behandeln von Randbereichen der landwirtschaftlichen Fläche entsprechend des jeweiligen Typs, beispielsweise Wasserfläche oder landwirtschaftliche Fläche, anzupassen, wobei in vorteilhafter Weise vorgesehen ist, dass die Behandlung des Randbereichs angepasst wird, sofern der jeweilige Typ in einer Entfernung die kleiner oder gleich dem entsprechenden Abstand ist, lokalisiert wird. So kann vorgesehen sein, dass für einen Düngerstreuer mit 30 m Arbeitsbreite in einem Abstand von 15 m und weniger von der Mittelachse der Flächentyp lokalisiert wird und sobald der Abstand der Mittelachse des Streuers von der Feldgrenze weniger als 15 m ist, wird eine Anpassung der Verteilcharakteristik des Düngerstreuers vorgenommen. Zusätzlich kann beispielsweise noch in einer Entfernung von 16 m oder weniger von der Mittelachse des Düngerstreuers überprüft werden, ob ein Gewässer vorliegt. So dass auf diese Weise bei Detektion eines Gewässers eine Sicherheitszone von 1 m durch entsprechende Anpassung der Streucharakteristik eingehalten werden könnte. Würde der Flächentyp lediglich bis zu einer Entfernung von 15 m überprüft, würde eine Wasserfläche in 15,5 m beispielsweise nicht detektiert.

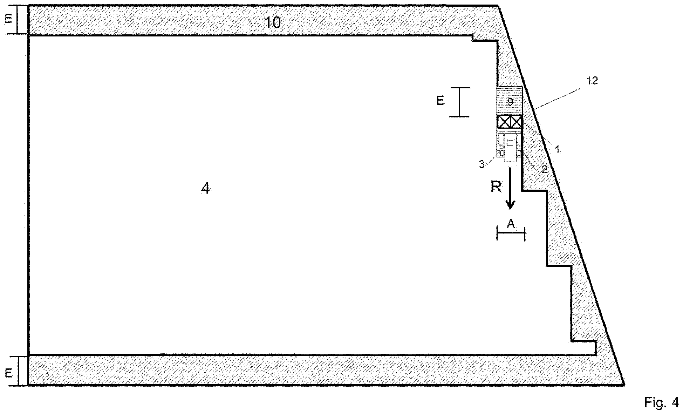

Andererseits könnte bei Überprüfung des Flächentyps in verschiedenen Abständen von der Mittelachse bei Unterscheidung zwischen bearbeiteter und unbearbeiteter Fläche und sofern sich zumindest zwei dieser Abstände innerhalb der Arbeitsbreite befinden auch eine vorausschauende Steuerung, beispielsweise eine Mengensteuerung, beispielsweise für einzelne Teilbreiten, wie beispielsweise einzelne Spritzdüsen oder zumindest einzeln für die beiden Seiten eines Spritzgestänges durchgeführt werden.

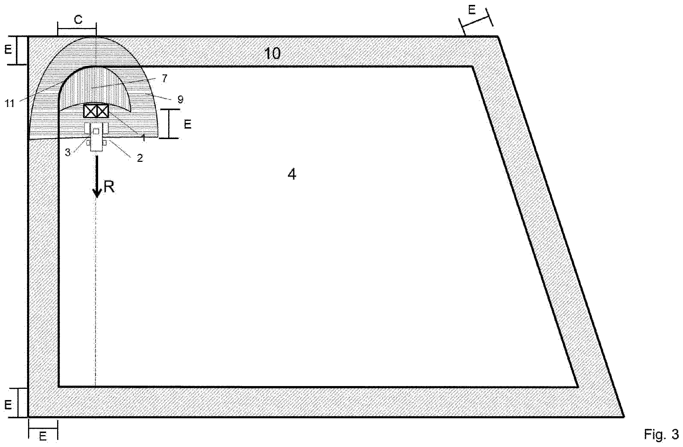

Fig. 3 zeigt eine Verteilmaschine 1 angehängt an eine landwirtschaftliche Zugmaschine 2 mit einem Positionsbestimmungssystem 3 beim Bearbeiten einer landwirtschaftlichen Fläche 4 für die eine Zone 10 von der Bearbeitung freigehalten wird, indem um den Arbeitsbereich 7 der Verteilmaschine 1 eine Sperrzone 9 definiert wird. Solange oder sobald sich diese Fläche außerhalb der zu bearbeitenden Fläche befindet, wird entsprechend der Verteilvorgang unterbrochen und so eine Zone am Rand der landwirtschaftlichen Fläche entsprechend der Breite E der Sperrzone vor der Verteilmaschine bzw. der Differenz der Radien von Arbeitsbreite 7 und Sperrzone 9 neben und hinter der Verteilmaschine von der Bearbeitung frei gehalten.
Je nachdem, wie die Geometrie dieser Sperrzone ausgestaltet ist, können sich beispielsweise bei zumindest teilweise runden Sperrzonen je nach Fahrtrichtung abgerundete Verläufe 11 der bearbeiteten Fläche 4 in Eckbereichen der landwirtschaftlichen Fläche ergeben. Die Wahl der Sperrzonengeometrie ist daher normalerweise von der Geometrie der landwirtschaftlichen Fläche und der jeweiligen Bearbeitungsrichtung abhängig, insbesondere kann es sich bei der Geometrie der Sperrzone um einen Kreis, einen Halbkreis, ein Quadrat, ein Rechteck oder ein beliebiges Polygon handeln.
Die geschilderte Sperrzone kann, wie in Fig. 4 dargestellt, insbesondere in vorteilhafter Weise verwendet werden, um an den in und entgegen der Fahrtrichtung R gelegenen Stirnseiten der landwirtschaftlichen Fläche 4 ein Vorgewende 10 von der Bearbeitung, beispielsweise mit der Sämaschine 1 freizuhalten und diesen Bereich erst zum Schluss des Bearbeitungsvorganges der landwirtschaftlichen Fläche zu bearbeiten. Hierfür wird eine Sperrzone 9 vor und hinter der Verteilmaschine derart definiert, dass bei der Bearbeitung der landwirtschaftlichen Fläche eine unbearbeitete Zone 10 der Breite E entsteht, während senkrecht zu den Stirnseiten gelegene Seiten der landwirtschaftlichen Fläche bis zum Rand bearbeitet werden. Abgeschrägte Seiten 12 werden in dargestellter Weise so gearbeitet, dass ein unbearbeiteter Streifen entsteht und zusätzlich unbearbeitete Dreiecke, deren zumindest eine Seite die Länge der Arbeitsbreite A der Verteilmaschine aufweist.

Alternativ kann in vorteilhafter Weise nicht die Bearbeitung der kompletten Arbeitsbreite auf einmal geschaltet werden, sondern einzelne Teilbreiten, beispielsweise können einzelne Säaggregate hinsichtlich der Sperrzone angesteuert werden, so dass der stufenartige Verlauf der Bearbeitung, welcher an der schrägen Seite 12 entsteht abgeschwächt oder vermieden wird.

Vorgennannte beispielhafte Ausgestaltungen der Erfindung sind in gleicher oder ähnlicher Weise auf auch andere Verteilmaschinen, beispielsweise Pflanzenschutzspritzen, welche ebenfalls in besonderer Weise bei der Randbehandlung gesteuert werden müssen und unter Umständen ebenfalls über spezielle Randbehandlungsvorrichtungen, beispielsweise Randdüsen, verfügen, übertragbar.

## Patentansprüche

1. Verfahren zur Steuerung einer Maschine (1) zur Verteilung von landwirtschaftlichem Gut, vorzugsweise einer Feldspritze und/oder eines Düngerstreuers, auf einer ersten, landwirtschaftlichen Fläche (4), mit einem auf der landwirtschaftlichen Maschine (1) und/oder einem ihr zugeordneten Zugfahrzeug (2) angeordneten Jobrechner und/oder Terminal und einem auf dem Jobrechner und/oder dem Terminal gespeicherten Programm zur Steuerung der landwirtschaftlichen Maschine (1) und einem elektronischen Standortbestimmungssystem (3) und in dem Speicher des Jobrechners und/oder Terminals hinterlegten Positionsdaten der Grenze der zu bearbeitenden Fläche und zumindest einer in dem Speicher des Jobrechners und/oder Terminals hinterlegten Vorschrift zur Einstellung von Einstellparametern der landwirtschaftlichen Maschine (1), vorzugsweise Grenzstreueinrichtungen eines Düngerstreuers und/oder Randdüsen einer Feldspritze vorzugsweise zur Bearbeitung von Randbereichen einer landwirtschaftlichen Fläche (4), wobei ein Signal durch das auf dem Jobrechner und/oder dem Terminal gespeicherte Programm generiert wird, falls sich in einer Entfernung, welche gleich oder kleiner als ein zuvor festgelegter Wert ist, von der Verteilmaschine (1) in beliebiger Richtung eine zweite Fläche (10) befindet, welche vorzugsweise außerhalb der Grenzen der zu bearbeitenden landwirtschaftlichen Fläche ist und/ oder eine bereits bearbeitete oder noch unbearbeitete Fläche markiert, und dieses Signal verwendet wird, um die Einstellung von Einstellparametern der landwirtschaftlichen Maschine, vorzugsweise Grenzstreueinrichtung eines Düngerstreuers und/oder Düsen einer Feldspritze vorzugsweise zur Bearbeitung von Randbereichen einer landwirtschaftlichen Fläche und/oder Dosierelementen einer Sämaschine und/oder Spuranreißern einer Sämaschine, entsprechend der hinterlegten Vorschrift durchzuführen, wobei die Vorschrift zur Einstellung von Einstellparametern derart ausgestaltet ist, dass eine Sperrzone (9) definiert wird, welche an zumindest einer Maschinenseite der landwirtschaftlichen Maschine (1) angeordnet ist, so dass bei Vorliegen eines Signals, welches vorzugsweise eine Feldgrenze und/oder angrenzende Fläche und/oder bearbeitete und/oder unbearbeitete Fläche (10) signalisiert, die Sperrzone von zu verteilendem Gut, vorzugsweise Pflanzenschutzmittel und/oder Düngemittel und/oder Saatgut, frei bleibt
**dadurch gekennzeichnet, dass**
die Sperrzone (9) in Fahrtrichtung vor den Verteilorganen der landwirtschaftlichen Maschine (1) platziert wird, so dass vor Erreichen der Feldgrenze einer landwirtschaftlichen Fläche (4) ein Bereich am Rand der landwirtschaftlichen Fläche in Fahrtrichtung, ein sogenanntes Vorgewende (10), von der Verteilung des landwirtschaftlichen Gutes ausgenommen ist.

## Claims

1. Method for controlling a machine (1) for distributing agricultural material, preferably a field spray and/or fertilizer spreader, on a first agricultural area (4), having a job computer and/or terminal arranged on the agricultural machine (1) and/or a traction vehicle (2) assigned thereto and a program which is stored on the job computer and/or the terminal and has the purpose of controlling the agricultural machine (1) and an electronic location-determining system (3) and position data which is stored in the memory of the job computer and/or terminal and relates to the boundary of the area to be worked and at least one rule which is stored in the memory of the job computer and/or terminal and relates to the setting of setting parameters of the agricultural machine (1), preferably boundary spreader devices of a fertilizer spreader and/or edge nozzles of a field spray, preferably for processing edge regions of an agricultural area (4), wherein a signal is generated by the program which is stored in the job computer and/or the terminal if, at a distance which is equal to or less than a previously defined value from the distributor machine (1) in any direction, there is a second area (10), which area (10) is preferably outside the boundaries of the agricultural area which is to be worked and/or marks an area which has already been worked or not yet worked, and this signal is used to set setting parameters of the agricultural machine, preferably a boundary spreader device of a fertilizer spreader and/or nozzles of a field spray preferably for working edge regions of an agricultural area and/or metering elements of a sowing machine and/or lane markers of a sowing machine, corresponding to the stored rule, wherein the rule for setting setting parameters is configured in such a way that an exclusion zone (9) is defined which is arranged on at least one side of the agricultural machine (1), with the result that when a signal is present which preferably signals a field boundary and/or adjoining area and/or worked and/or unworked area (10), the exclusion zone for material which is to be distributed, preferably crop protection agent and/or fertilizer and/or seeds, remains free
**characterized in that**
the exclusion zone (9) is positioned in front of the distributor elements of the agricultural machine (1) in the direction of travel, with the result that before the field boundary of an agricultural area (4) is reached, a region at the edge of the agricultural area in the direction of travel, referred to as a headland (10), is excluded from the distribution of the agricultural material.

## Revendications

1. Procédé de commande d'une machine (1) pour épandre un produit agricole, de préférence un pulvérisateur agricole et/ou un distributeur d'engrais, sur une première surface agricole (4), avec un ordinateur de tâches et/ou un terminal disposé sur la machine agricole (1) et/ou sur un tracteur (2) qui lui est associé et un programme mémorisé sur l'ordinateur de tâches et/ou sur le terminal pour la commande de la machine agricole (1) et avec un système électronique de détermination de situation (3) et des données de position stockées dans la mémoire de l'ordinateur de tâches et/ou du terminal de la limite de la surface à traiter et au moins une prescription stockée dans la mémoire de l'ordinateur de tâches et/ou du terminal pour le réglage de paramètres de réglage de la machine agricole (1), de préférence de dispositifs de distribution en bordure d'un distributeur d'engrais et/ou de gicleurs de bordure d'un pulvérisateur agricole de préférence pour le traitement de régions de bordure d'une surface agricole (4), dans lequel on génère un signal au moyen du programme mémorisé sur l'ordinateur de tâches et/ou le terminal, dans le cas où il se trouve dans n'importe quelle direction, à une distance de la machine d'épandage (1) qui est égale ou inférieure à une valeur fixée au préalable, une deuxième surface (10) qui est de préférence située à l'extérieur de la surface agricole à traiter et/ou qui marque une surface déjà traitée ou pas encore traitée, et on utilise ce signal pour opérer le réglage de paramètres de réglage de la machine agricole, de préférence d'un dispositif de distribution en bordure d'un distributeur d'engrais et/ou de gicleurs d'un pulvérisateur agricole, de préférence pour le traitement de zones de bordure d'une surface agricole et/ou des éléments de dosage d'un semoir et/ou de marqueurs de voie d'un semoir, conformément à la prescription stockée, dans lequel la prescription pour le réglage de paramètres de réglage est constituée de telle manière que l'on définisse une zone d'arrêt (9), qui est disposée sur au moins un côté de machine de la machine agricole (1), de telle manière qu'en présence d'un signal, qui signale de préférence une limite de champ et/ou une surface adjacente et/ou une surface traitée et/ou non traitée (10), la zone d'arrêt reste libre du produit à épandre, de préférence de produits phytosanitaires et/ou d'engrais et/ou de semences, **caractérisé en ce que** l'on place la zone d'arrêt (9) dans la direction de marche devant les organes de distribution de la machine agricole (1), de telle manière qu'avant d'atteindre la limite du champ d'une surface agricole (4) une région située en bordure de la surface agricole dans la direction de marche, une région appelée fourrière (10), soit exclue de l'épandage du produit agricole.
